# EUROPEAN PATENT SPECIFICATION

(11) **EP 2 108 434 B1**
(45) Date of publication and mention of the grant of the patent: **13.10.2010**
(21) Application number: 09250825.8
(22) Date of filing: 24.03.2009
(51) Int. Cl.: B01D 46/24

(54) **Honeycomb structure**
Wabenstruktur
Structure en nid d'abeille

(30) Priority: 28.03.2008 JP 2008088150
(43) Date of publication of application: 14.10.2009
(73) Proprietor: NGK Insulators, Ltd., Nagoya-City, Aichi Pref. 467-8530 (JP)
(72) Inventor: Nakatani, Takahiko, Nagoya City, Aichi-ken 467-8530 (JP)
(74) Representative: Paget, Hugh Charles Edward

(56) References cited:
- EP-A- 1 470 861
- EP-A- 1 538 133
- EP-A- 1 974 793
- WO-A-02/10562
- US-A1- 2006 280 905

## Description

### Background of the Invention and Prior Art Statement

The present invention relates to a porous honeycomb structure which is used to remove solid particles containing carbon as a main component from a combustion exhaust gas discharged from an internal combustion engine such as a diesel engine, a boiler or the like.

There is an increasing need to remove, from exhaust gas, fine particles and harmful substances contained in the exhaust gas from an internal combustion engine, a boiler or the like in consideration of an influence on the environment. In particular, a regulation on the removal of the fine particles (hereinafter sometimes referred to as the particulate matter (PM)) discharged from a diesel engine tends to be strengthened worldwide, the use of the honeycomb structure as a trapping filter (hereinafter sometimes referred to as a diesel particulate filter (DPF)) for removing the PM attracts attention, and various systems are suggested. The DPF usually has a structure in which a plurality of cells functioning as flow paths of a fluid to be treated are partitioned by porous partition walls. The cells are alternately plugged, and the porous partition walls forming the cells perform a filter function.

In the DPF, the exhaust gas containing fine particles is allowed to flow into one end of the filter, the fine particles are trapped by the partition walls, and then the purified gas is discharged from the other end of the filter. However, there has been a problem that, when the exhaust gas flows into the filter, the fine particles contained in the exhaust gas are deposited at the one end (an inflow-side end) to clog the cells. This is a phenomenon easily generated in a case where the exhaust gas contains a large amount of fine particles or in a cold district. When the cells are clogged in this manner, there is a problem that a pressure loss in the DPF rapidly increases. To suppress the clogging of the cells, there are provided two types of cells, that is, the group of the cells having a large volume (hereinafter also referred to as the large-volume cells) and the group of the cells having a small volume (hereinafter also referred to as the small-volume cells). The large-volume cell group in the exhaust gas outflow-side end of the filter is plugged with a filler, the small-volume cell group in the exhaust gas inflow-side end is plugged with the filler, and the internal surface areas of the cells opened on the inflow side (hereinafter also referred to as the inflow-side cells) are made relatively larger than those of the cells opened on the outflow side (hereinafter also referred to as the outflow-side cells), thereby suppressing the increase of the pressure loss during the PM trapping. Such a filter is known (e.g., see JP-A-56-124417, JP-A-62-96717, and U.S. Patent No. 4364761). As this filter, a filter is also known in which the inflow-side cells and the outflow-side cells have octagonal and quadrangular shapes, respectively, in order to secure a predetermined strength (e.g., see WO 02/10562A1 pamphlet and French Patent No. 2789327).

That is, in the honeycomb structure used as the filter for the purification of the exhaust gas as disclosed in Patent Documents 1 to 5, as compared with a honeycomb structure in which the total amount of the internal surface areas of the inflow-side cell group is equal to that of the internal surface areas of the outflow-side cell group, the total amount of the surface areas of the inflow-side cell group is set to a relatively large amount, so that the thickness of the deposited layer of the trapped PM can be decreased, and eventually, as described above, the increase of the pressure loss during the PM trapping can be suppressed, and the limited amount of the trapped PM can be increased.

Furthermore, after trapping a certain amount of the PM, the engine is controlled to raise the temperature of the exhaust gas, or the temperature of a heater installed on an exhaust gas upstream side from the honeycomb structure is raised to perform a regeneration treatment for bringing the PM into contact with high-temperature gas to burn the PM. However, when the thickness of the PM deposited layer is decreased, a PM burning speed can be increased.

However, when the open ratio of the inflow-side end is set to an open ratio larger than that of the outflow-side end as described above, the volumes of the plugging portions in the outflow-side end increases, and the Young's modulus of each outflow-side plugging portion is larger than that of each inflow-side plugging portion. That is, the hardness of the outflow-side plugging portion increases, which causes a problem that a crack is easily generated in a case where temperature in the vicinity of the plugging portions on the outflow side where the PM is especially easily deposited rapidly rises during a regeneration treatment.

### Summary of the Invention

An object of the present invention is to provide a honeycomb structure in which the Young's modulus of each outflow-side plugging portion is set to a Young's modulus smaller than that of each inflow-side plugging portion, and thermal stress is suppressed to decrease the generation of a crack due to the rapid temperature rise of the outflow-side end of the honeycomb structure during a regeneration treatment.

The present inventor has intensively performed investigation in view of the above problems and has found that when the depth of outflow-side plugging portions is made smaller than that of inflow-side plugging portions and the porosity of the outflow-side plugging portions is made larger than that of the inflow-side plugging portions, the Young's modulus of each outflow-side plugging portion can be made smaller than that of each inflow-side plugging portion, and a crack limit during the regeneration treatment can be increased. That is, according to the present invention, the following honeycomb structure is provided.

[1] A honeycomb structure having a plurality of cells partitioned by porous partition walls and functioning as flow paths of a fluid to be treated, predetermined cells in the inflow-side end for the fluid to be treated being plugged with a filler, the remaining cells in the outflow-side end for the fluid to be treated being plugged with the filler, wherein the average of the sectional areas perpendicular to the central axis direction of plugging portions in the inflow-side end of the cells and the average of the sectional areas perpendicular to the central axis direction of plugging portions in the outflow-side end of the cells have a relation of S1 < S2, in which S1 is an average inflow-side plugging portion sectional area and S2 is an average outflow-side plugging portion sectional area, the depths of the plugging portions in the inflow-side end and the depths of the plugging portions in the outflow-side end have a relation of D1 > D2, in which D1 is an inflow-side plugging portion depth and D2 is an outflow-side plugging portion depth, the porosity of the filler in the inflow-side end and the porosity of the filler in the outflow-side end have a relation of P1 < P2, in which P1 is an inflow-side plugging portion porosity and P2 is an outflow-side plugging portion porosity, and the Young's modulus of each plugging portion in the outflow-side end is smaller than that of each plugging portion in the inflow-side end.

[2] The honeycomb structure according to the above [1], wherein the average inflow-side plugging portion sectional area S1 is in a range of 0.2 mm² < S1 < 1.0 mm², the average outflow-side plugging portion sectional area S2 is in a range of 0.4 mm² < S2 < 1.4 mm², the inflow-side plugging portion depth D1 is in a range of 5 mm < D1 < 15 mm, the outflow-side plugging portion depth D2 is in a range of 2 mm < D2 < 10 mm, the inflow-side plugging portion porosity P1 is in a range of 40% < P1 < 60%, and the outflow-side plugging portion porosity P2 is in a range of 50% < P2 < 80%.

[3] The honeycomb structure according to the above [1], wherein the average inflow-side plugging portion sectional area S1 is in a range of 0.3 mm² < S1 < 0.7 mm², the average outflow-side plugging portion sectional area S2 is in a range of 0.6 mm² < S2 < 1.3 mm², the inflow-side plugging portion depth D1 is in a range of 8 mm < D1 < 12 mm, the outflow-side plugging portion depth D2 is in a range of 3 mm < D2 < 9 mm, the inflow-side plugging portion porosity P1 is in a range of 45% < P1 < 55%, and the outflow-side plugging portion porosity P2 is in a range of 55% < P2 < 75%.

[4] The honeycomb structure according to any one of the above [1] to [3], wherein the opposite ends of the cells disposed on both sides which sandwich one of the partition walls are plugged, and a shape of a section perpendicular to the central axis direction of the cell plugged in the inflow-side end is different from that of the cell plugged in the outflow-side end.

In the honeycomb structure for use in a filter for the purification of exhaust gas, when the sectional area perpendicular to the cell central axis direction (longitudinal direction)of each outflow-side plugging portion is made larger than that of each inflow-side plugging portion, the depth of the outflow-side plugging portion is made smaller than that of the inflow-side plugging portion, and the porosity of the outflow-side plugging portion is made larger than that of the inflow-side plugging portion, the Young's modulus of the outflow-side plugging portion can be smaller than that of the inflow-side plugging portion. That is, thermal stress during the regeneration treatment can be suppressed to increase a crack limit, so that the generation of a crack due to the local temperature rise of the outflow-side plugging portion can be decreased.

### Brief Description of the Drawings

Fig. 1 is a perspective view schematically showing a honeycomb structure of Embodiment 1 of the present invention formed by joining honeycomb segments together.

Fig. 2 is a perspective view schematically showing a honeycomb segment constituting the honeycomb structure of Fig. 1.

Fig. 3 is a sectional view cut along the A-A line of Fig. 2.

Fig. 4 is a perspective view schematically showing an integrally formed honeycomb structure of Embodiment 2 of the present invention.

### Description of Reference Numerals

1: joined type honeycomb structure, 2: honeycomb segment, 4: outer peripheral coating layer, 5: cell, 5a: inflow-side cell, 5b: outflow-side cell, 6: partition wall, 7: filler, 9: joining material layer, 20: integral type honeycomb structure, A: inflow-side end, and B: outflow-side end.

### Description of the Preferred Embodiment

Hereinafter, embodiments of the present invention will be described with reference to the drawings. The present invention is not limited to the following embodiments, and can be changed, modified or improved without deviating from the scope of the present invention. It is to be noted that unless otherwise specified, in the following description, a section means a section cut along a plane perpendicular to a cell central axis direction (the longitudinal direction), and a sectional area means the area of the section cut along the plane perpendicular to the cell central axis direction (the longitudinal direction). Moreover, in the following description, a honeycomb structure having a structure integrally formed as a whole is an integral type honeycomb structure, and a honeycomb structure having a structure in which a plurality of honeycomb segments are joined by means of joining material layers is a joined type honeycomb structure. Furthermore, when the integral type honeycomb structure and the joined type honeycomb structure are not especially distinguished from each other, the honeycomb structure is mentioned.

### (Embodiment 1)

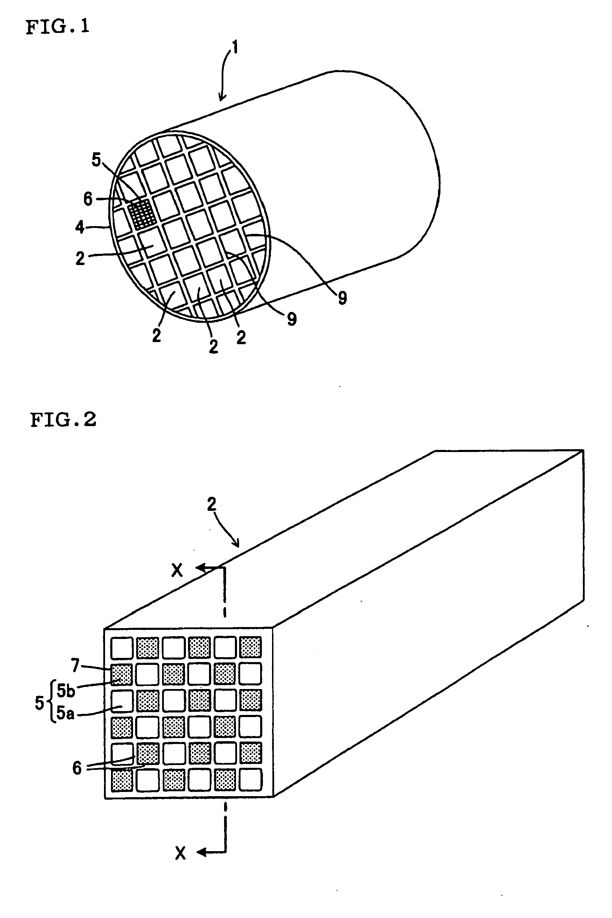

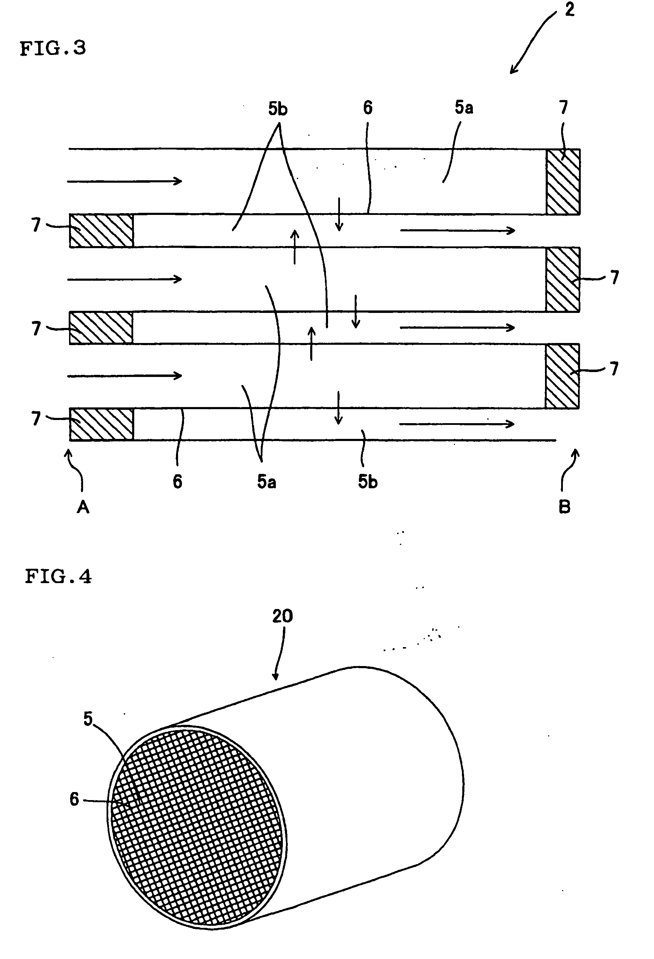

Fig. 1 is a perspective view schematically showing a joined type honeycomb structure 1 as one embodiment of the present invention. Fig. 2 is a perspective view showing a honeycomb segment 2 constituting the honeycomb structure 1 of Fig. 1. Furthermore, Fig. 3 is a sectional view of the honeycomb segment 2 cut along the X-X line of Fig. 2.

Here, as shown in Figs. 1 and 2, the honeycomb segment 2 constitutes a part of the whole constitution of the honeycomb structure 1 (a joined honeycomb segment article), and a plurality of honeycomb segments 2 are joined in a direction perpendicular to the central axis direction of the honeycomb structure 1 to constitute the honeycomb structure 1. Cells 5 are arranged in parallel with one another in the central axis direction of the honeycomb structure 1, and the ends of the adjacent cells 5 are alternately plugged with a filler 7.

The honeycomb segment will further specifically be described. The honeycomb segment 2 is formed into a columnar shape, includes porous partition walls 6 for partitioning the plurality of cells 5 constituting flow paths of a fluid to be treated, and is provided with two types of cells 5a, 5b having different sectional areas as shown in Fig. 3. The sectional area of the inflow-side cell 5a is larger than that of the outflow-side cell 5b. The sectional shape of the inflow-side cell 5a may be different from that of the outflow-side cell 5b. That is, the section of each cell may have a desired shape such as an octagonal shape obtained by cutting portions corresponding to the corners of a quadrangular shape or a substantially quadrangular shape whose portions corresponding to corners are circular arc as long as segment strength and a PM trapping area can sufficiently be secured. Here, the corners are vertexes and portions around the vertexes in a case where the sectional shape is the corresponding polygonal shape (a polygonal shape formed by extending a straight portion).

The inflow-side cell 5a and the outflow-side cell 5b are alternately arranged in a first direction and a second direction vertical to the first direction in cell sections. Moreover, the inflow-side cell 5a opened in an inflow-side end A and plugged in an outflow-side end B and the outflow-side cell 5b plugged in the inflow-side end A and opened in the outflow-side end B are alternately arranged, so that the fluid to be treated which has flowed into the opened inflow-side cells 5a in the inflow-side end A is transmitted through the partition walls 6 and discharged into the outflow-side cells 5b as the transmitted fluid, and the transmitted fluid can be discharged from the opened outflow-side cells 5b in the outflow-side end B.

Furthermore, in the present embodiment, the sectional area of each outflow-side plugging portion is larger than that of the inflow-side plugging portion. That is, the average of the sectional areas perpendicular to the central axis direction of the cells of the plugging portions in the inflow-side end A and the average of the sectional areas perpendicular to the central axis direction of the plugging portions in the outflow-side end B of the cells have a relation of S1 < S2, in which S1 is an average inflow-side plugging portion sectional area and S2 is an average outflow-side plugging portion sectional area. At this time, the average sectional area is in a range of preferably 0.2 mm² < S1 < 1.0 mm² and 0.4 mm² < S2 < 1.4 mm², further preferably 0.3 mm² < S1 < 0.7 mm² and 0.6 mm² < S2 < 1.3 mm²_{.}

As the raw material of the honeycomb segment 2, from the viewpoints of strength and thermal resistance, it is preferable to use at least one type selected from the group consisting of silicon carbide, a silicon-silicon carbide based composite material, silicon nitride, cordierite, mullite, alumina, spinel, a silicon carbide-cordierite based composite material, a silicon-silicon carbide composite material, lithium aluminum silicate, aluminum titanate, and an Fe-Cr-Al based metal. Above all, silicon carbide or the silicon-silicon carbide based composite material is preferable.

To prepare the honeycomb segment 2, for example, a binder such as methyl cellulose, hydroxypropoxyl cellulose, hydroxyethyl cellulose, caroboxymethyl cellulose or polyvinyl alcohol, a pore former, a surfactant, water as a solvent and the like are added to the raw material appropriately selected from the above materials to form kneaded clay having plasticity, and this kneaded clay is extrusion formed into the above shape. Subsequently, after performing drying by microwaves, hot air or the like, sintering can be performed.

As the filler 7 for use in plugging the cells 5, a material similar to that of the honeycomb segment 2 may be used. To perform the plugging with the filler 7, while the cells 5 which are not plugged are masked, the end of the honeycomb segment 2 is immersed into the slurried filler 7 to fill the opened cells 5 with the material. At this time, the depths of the plugging portions of the outflow-side cells 5b are set to depths smaller than those of the plugging portions of the inflow-side cells 5a. That is, the depths of the plugging portions in the inflow-side end A and the depths of the plugging portions in the outflow-side end B have a relation of D1 > D2, in which D1 is an inflow-side plugging portion depth and D2 is an outflow-side plugging portion depth. At this time, preferably, the depth D1 is in a range of 5 mm < D1 < 15 mm, and the depth D2 is in a range of 2 mm < D2 < 10 mm. Further preferably, the depth D1 is in a range of 8 mm < D1 < 12 mm, and the depth D2 is in a range of 3 mm < D2 < 9 mm. The plugging portion depth can be set to a desired value by adjusting the depth of the honeycomb segment 2 immersed into the filler 7 and changing the filling amount of the filler 7.

Moreover, at this time, the porosity of each plugging portion of the outflow-side cell 5b is set to a porosity smaller than that of each plugging portion of the inflow-side cell 5a. That is, the porosity of the plugging portion in the inflow-side end A and the porosity of the plugging portion in the outflow-side end B have a relation of P1 < P2, in which P1 is an inflow-side plugging portion porosity and P2 is an outflow-side plugging portion porosity. At this time, preferably, the porosity P1 is in a range of 40% < P1 < 60%, and the porosity P2 is in a range of 50% < P2 < 80%. Further preferably, the porosity P1 is in a range of 45% < P1 < 55%, and the porosity P2 is in a range of 55% < P2 < 75%. The plugging portion porosity can be set to a desired value by adjusting a material such as silicon carbide among the materials of the filler 7 and the particle diameters of the pore former.

Thus, in the honeycomb structure 1 of Embodiment 1, since the plugging portion depth of the outflow-side cell 5b is smaller than that of the inflow-side cell 5a and the plugging portion porosity of the outflow-side cell 5b is larger than that of the inflow-side cell 5a, the Young's modulus of the outflow-side plugging portion can be smaller than that of the inflow-side plugging portion, so that the generation of crack due to the local temperature rise of the outflow-side end during a regeneration treatment can be decreased. In other words, when the volumes of the plugging portions are decreased and the porosities of the plugging portions are increased, the plugging portions are provided with flexibility, a thermal stress in a case where a thermal shock is applied during the regeneration treatment can be relaxed, and the generation of the crack can be suppressed.

The filling with the filler 7 may be performed before or after the firing after the forming of the honeycomb segment 2, but the filling is preferably performed before the firing because only one firing step is required. That is, after drying the honeycomb segment 2 provided with the filler 7, heating and degreasing are performed in, for example, a nitrogen atmosphere, and then the firing in an inert atmosphere of argon or the like can be performed to obtain the honeycomb segment constituting the honeycomb structure of the present invention. The firing temperature and the firing atmosphere vary in accordance with the raw material, and any person skilled in the art can appropriately select the firing temperature and the firing atmosphere for the selected raw material.

After preparing the honeycomb segment 2 as described above, the outer peripheral surface of the honeycomb segment 2 is coated with a slurried joining material layer 9, a plurality of honeycomb segments 2 are assembled to have a predetermined three-dimensional shape (the whole constitution of the honeycomb structure 1), and the assembled honeycomb segments are pressed, then heated and dried. Thus, the plurality of honeycomb segments 2 are integrally joined to obtain a joined honeycomb segment article.

As shown in, for example, Fig. 1, the honeycomb structure 1 obtained in the present invention has a structure including the joined honeycomb segment article in which the joining faces of the plurality of honeycomb segments 2 are integrally joined together by means of the joining material layers, and an outer peripheral coating layer 4 which covers the outer peripheral surface of the joined honeycomb segment article. In the structure, the plurality of cells 5 constituting flow paths of a fluid to be treated are arranged in parallel with one another in a central axis direction.

It is to be noted that the joining material layer 9 used in the present invention, with which the outer peripheral surface of the honeycomb segment 2 is coated, functions to join the honeycomb segments 2 together. To form the joining material layer 9, for example, after preparing the honeycomb segment 2, the outer peripheral surface of the honeycomb segment 2 is coated with the slurried joining material layer 9, the plurality of honeycomb segments 2 are assembled to obtain the predetermined three-dimensional shape (the whole structure of the honeycomb structure 1), and the assembled honeycomb segments are pressed, and then heated and dried. In this case, the outer peripheral surfaces of the adjacent honeycomb segments 2 may be coated, but only one of the corresponding outer peripheral surfaces of the adjacent honeycomb segments 2 may be coated.

Preferable examples of the joining material layer 9 used in the present invention include an inorganic fiber, an inorganic binder, an organic binder, and inorganic particles. Specific examples of the inorganic fiber include an oxide fiber of alumino silicate, alumina or the like, and another fiber (e.g., an SiC fiber). Examples of the inorganic binder include silica sol, alumina sol and clay. Examples of the organic binder include polyvinyl alcohol (PVA), carboxymethyl cellulose (CMC) and methyl cellulose (MC). Examples of the inorganic particles include ceramic materials such as silicon carbide, silicon nitride, cordierite, alumina and mullite.

The joined type honeycomb structure 1 formed as described above is formed as a joined article of honeycomb segments where, as shown in Fig. 3, the inflow-side cells 5a are opened in the inflow-side end A, whereas the cells are plugged with the filler 7 in the outflow-side end B. The outflow-side cells 5b adjacent to the inflow-side cells are plugged with the filler 7 in the inflow-side end A, but the cells are opened in the outflow-side end B. When the cells are plugged in this manner, as shown in Fig. 2, the end of the honeycomb segment 2 has a checkered pattern. When the honeycomb structure 1 including these joined honeycomb segments 2 is arranged in an exhaust system of the exhaust gas, the exhaust gas flows from the left side of Fig. 3 into the inflow-side cells 5a of the honeycomb segment 2 and moves to the right side. Then, when the exhaust gas passes through the partition walls 6, a particulate matter (PM) such as soot or the like included in the exhaust gas is trapped by the partition walls 6. Thus, the exhaust gas can be purified. When the PM is trapped in this manner, the PM is deposited in the honeycomb segment 2 with an elapse of time to increase a pressure loss. Therefore, the regeneration treatment for burning the PM is performed. However, in the honeycomb structure of the present invention, on the inflow side and the outflow side of the fluid to be treated, the average plugging portion area, the plugging portion depths and the plugging portion porosities are varied, when joining the honeycomb segments 2. In consequence, the Young's modulus of each outflow-side plugging portion is smaller than that of each inflow-side plugging portion, and any crack is not easily generated in the outflow-side end where burning heat is concentrated.

### (Embodiment 2)

Embodiment 2 of the present invention will be described. Fig. 4 is a perspective view schematically showing an integral type honeycomb structure 20 as another embodiment of the present invention. The honeycomb structure 20 is integrally formed, cells 5 are arranged in parallel with one another in the central axis direction of the honeycomb structure 20, and the ends of the adjacent cells 5 are alternately plugged with a filler 7.

The embodiment will further specifically be described. The integral type honeycomb structure 20 is formed into a columnar shape, includes porous partition walls 6 for partitioning the plurality of cells 5 constituting flow paths of a fluid to be treated, and is provided with two types of cells 5a, 5b having different sectional areas of sections cut along a plane perpendicular to the central axis direction of the cells 5. The sectional area of the inflow-side cell 5a is larger than that of the outflow-side cell 5b. In the same manner as in Embodiment 1, the sectional shape of the inflow-side cell 5a may be different from that of the outflow-side cell 5b. That is, each cell has an octagonal sectional shape obtained by cutting portions corresponding to corners of a quadrangular shape, or a substantially quadrangular sectional shape whose portions corresponding to corners are circular arc. The cell may have a desired shape as long as the segment strength and PM trapping area are sufficiently secured.

As to a honeycomb constitution, a material such as the filler 7 for use in plugging and other details, the present embodiment is almost similar to Embodiment 1 except that the honeycomb structure is integrally formed, and hence the description thereof is omitted.

### [Examples]

Hereinafter, the present invention will be described in more detail in accordance with examples, but the present invention is not limited to these examples.

### (Example 1)

A honeycomb structure was prepared from a material having a porosity of 52%. The honeycomb structure had a cylindrical shape with a diameter of 144 mm x a length of 152 mm, and a square cell sectional shape. The opposite ends of adjacent cells were plugged, an inflow-side plugging portion depth D1 was 10.0 mm, an outflow-side plugging portion depth D2 was 7.5 mm, an inflow-side plugging portion porosity P1 was 50.0%, an outflow-side plugging portion porosity P2 was 60.0%, an average inflow-side plugging portion sectional area S1 was 0.5 mm², and an average outflow-side plugging portion sectional area S2 was 1.0 mm². Table 1 shows values of parameters together with an average plugging portion sectional area ratio S2/S1 as a ratio of the average outflow-side plugging portion sectional area S2 with respect to the average inflow-side plugging portion sectional area S1.

### (Examples 2 to 8, Comparative Examples 1 to 19)

Examples 2 to 8 and Comparative Examples 1 to 19 were manufactured in the same manner as in Example 1 except that an outflow-side plugging portion depth D2, an outflow-side plugging portion porosity P2, an average inflow-side plugging portion sectional area S1 and an average outflow-side plugging portion sectional area S2 were changed as shown in Table 1.

### (Evaluation)

Each of the honeycomb structures of the examples and the comparative examples was disposed in an exhaust passage of an engine to constitute an exhaust gas purification device (the diesel particulate filter (DPF)). After soot was deposited on the structure in the engine, the structure was subjected to a regeneration treatment. An experiment was carried out in this manner, and a crack limit value during regeneration was measured. The results are shown in Table 1. First, the DPF on which the soot was deposited was subjected to post jetting with 1700 rpm x 95 Nm, and an inlet exhaust gas temperature was raised to 650°C. When a difference between pressures before and after the DPF lowered, the conditions were changed to 1050 rpm x 30 Nm to bring the engine into an idle operation condition. At that time, the concentration of oxygen rapidly rose, and a flow rate lowered. Therefore, the internal temperature of the DPF rapidly rose. When the temperature exceeded a material limit, a crack was generated in the outflow-side end of the DPF. The amount of the soot was gradually increased, and the amount [g/L] of the soot per volume at a time when the crack was generated was obtained as the crack limit value during the regeneration. Moreover, the difference of the Young's modulus between each inflow-side plugging portion and each outflow-side plugging portion of each honeycomb structure (the inflow-side plugging portion Young's modulus - the outflow-side plugging portion Young's modulus) is shown as the plugging portion Young's modulus difference in Table 1.

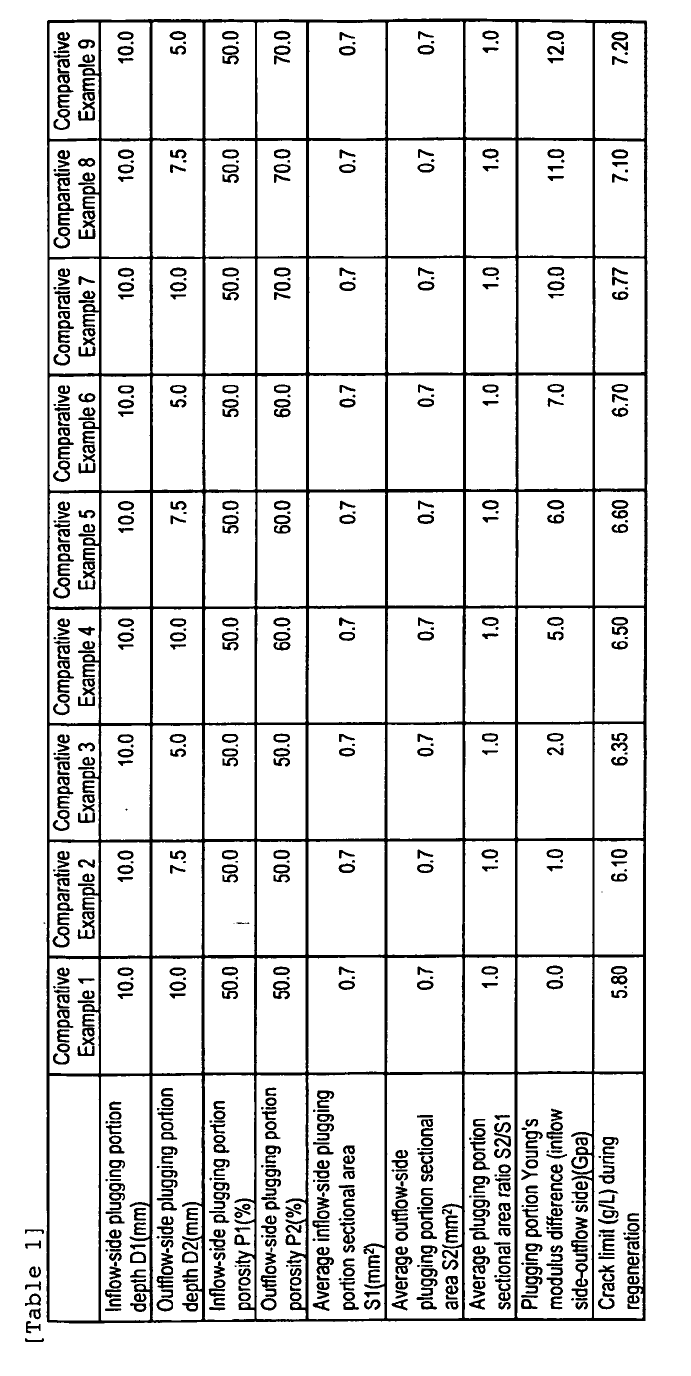

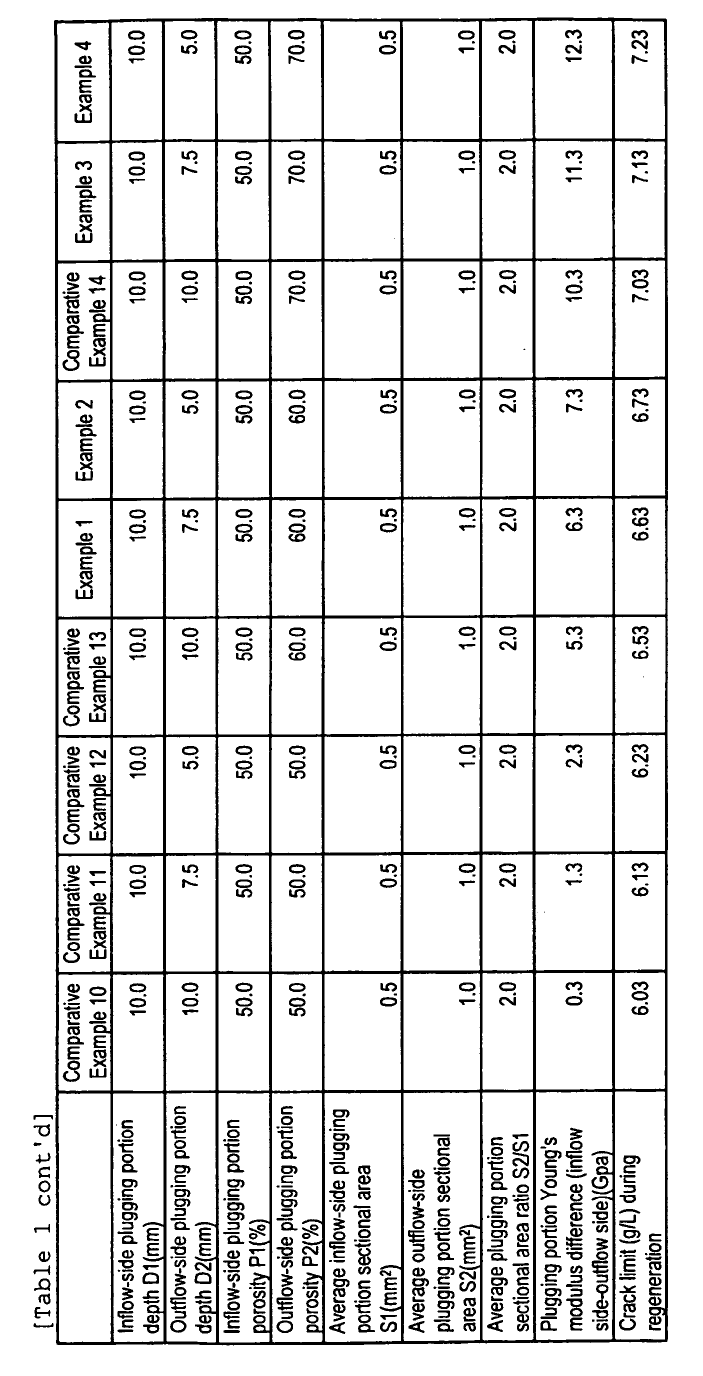

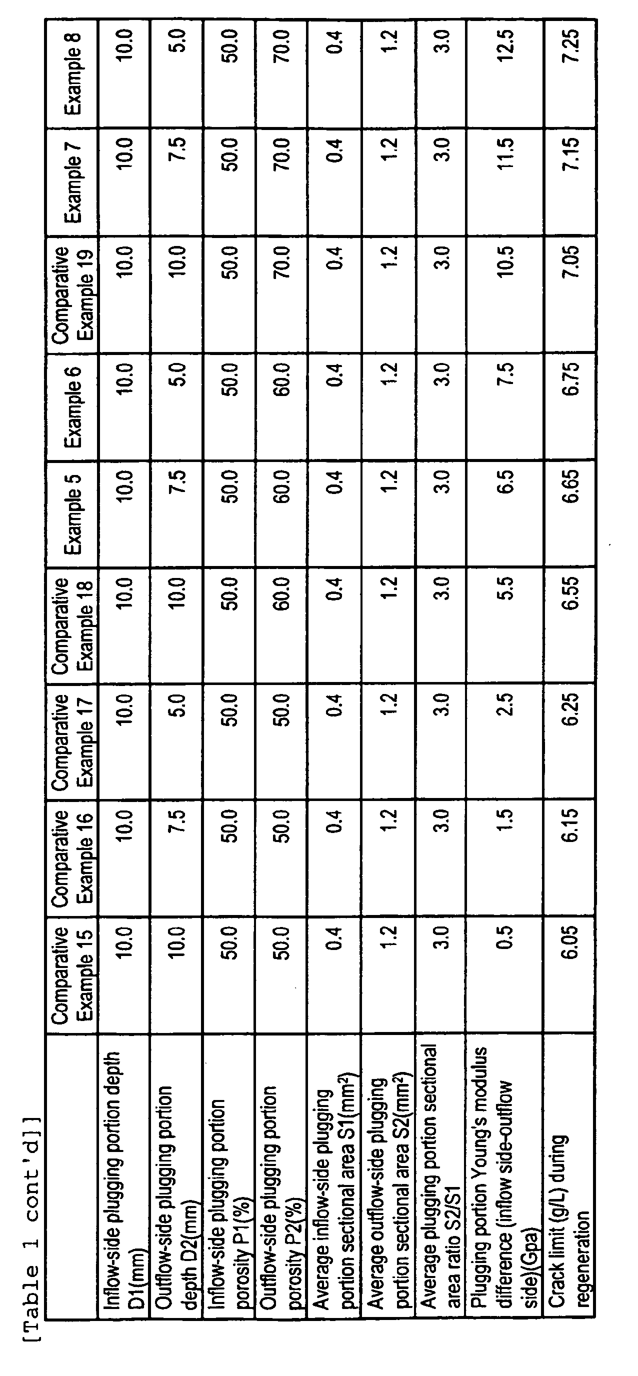

As shown in Table 1, in the honeycomb structure of each example, as compared with the honeycomb structure of each comparative example, where at least one of three parameters, that is, the outflow-side plugging portion depth D2, the outflow-side plugging portion porosity P2 and the average plugging portion sectional area ratio S2/S1 did not satisfy the requirement of the present invention, the Young's modulus of each outflow-side plugging portion was suppressed, and the crack limit during the regeneration increased. For example, in Example 8, as compared with Comparative Example 1 which is a usual quadrangular cell honeycomb structure, an effect of increasing the crack limit during the regeneration as much as 0.45 g/L was confirmed. On the other hand, when, for a purpose of increasing the plugging portion Young's modulus difference (the inflow side - the outflow side), the outflow-side plugging portion depth D2 was excessively decreased beyond the scope of the present invention, and the outflow-side plugging portion porosity P2 was excessively increased, a problem of the decrease of a plugging strength arose. Moreover, when the average plugging portion sectional area ratio S2/S1 was excessively increased, a problem of the deterioration of a pressure loss arose. In the honeycomb structure of the present invention, the plugging portion depths, porosities and sectional areas on the inflow side and the outflow side are controlled into predetermined ranges to keep a large plugging portion Young's modulus difference (the outflow side - the inflow side) and sufficiently increase the crack limit during the regeneration. Moreover, honeycomb strength, conventional honeycomb function or the like is not impaired, but the generation of the crack during the regeneration can be decreased.

A honeycomb structure of the present invention is preferably used as a trapping filter for exhaust gas and is especially useful as a diesel particulate filter (DPF) for trapping and removing particulate matter (PM) contained in an exhaust gas from a diesel engine or the like.

## Claims

1. A honeycomb structure having a plurality of cells partitioned by porous partition walls and functioning flow paths of a fluid to be treated, predetermined cells in the inflow-side end for the fluid to be treated being plugged with a filler, the remaining cells in the outflow-side end for the fluid to be treated being plugged with the filler,
wherein the average of the sectional areas perpendicular to the central axis direction of plugging portions in the inflow-side end of the cells and the average of the sectional areas perpendicular to the central axis direction of plugging portions in the outflow-side end of the cells have a relation of S1 < S2, in which S1 is an average inflow-side plugging portion sectional area and S2 is an average outflow-side plugging portion sectional area,
the depths of the plugging portions in the inflow-side end and the depths of the plugging portions in the outflow-side end have a relation of D1 > D2, in which D1 is an inflow-side plugging portion depth and D2 is an outflow-side plugging portion depth,
the porosity of the filler in the inflow-side end and the porosity of the filler in the outflow-side end have a relation of P1 < P2, in which P1 is an inflow-side plugging portion porosity and P2 is an outflow-side plugging portion porosity, and
the Young's modulus of each plugging portion in the outflow-side end is smaller than that of each plugging portion in the inflow-side end.

2. The honeycomb structure according to claim 1, wherein the average inflow-side plugging portion sectional area S1 is in a range of 0.2 mm² < S1 < 1.0 mm²,
the average outflow-side plugging portion sectional area S2 is in a range of 0.4 mm² < S2 < 1.4 mm²,
the inflow-side plugging portion depth D1 is in a range of 5 mm < D1 < 15 mm,
the outflow-side plugging portion depth D2 is in a range of 2 mm < D2 < 10 mm,
the inflow-side plugging portion porosity P1 is in a range of 40% < P1 < 60%, and
the outflow-side plugging portion porosity P2 is in a range of 50% < P2 < 80%.

3. The honeycomb structure according to claim 1, wherein the average inflow-side plugging portion sectional area S1 is in a range of 0.3 mm² < S1 < 0.7 mm²,
the average outflow-side plugging portion sectional area S2 is in a range of 0.6 mm² < S2 < 1.3 mm²,
the inflow-side plugging portion depth D1 is in a range of 8 mm < D1 < 12 mm,
the outflow-side plugging portion depth D2 is in a range of 3 mm < D2 < 9 mm,
the inflow-side plugging portion porosity P1 is in a range of 45% < P1 < 55%, and
the outflow-side plugging portion porosity P2 is in a range of 55% < P2 < 75%.

4. The honeycomb structure according to any one of claims 1 to 3, wherein the opposite ends of the cells disposed on both sides which sandwich one of the partition walls are plugged, and
a shape of a section perpendicular to the central axis direction of the cell plugged in the inflow-side end is different from that of the cell plugged in the outflow-side end.

## Patentansprüche

1. Wabenstruktur, die eine Vielzahl von Zellen aufweist, die durch poröse Trennwände voneinander getrennt sind und als Strömungspfade eines zu behandelnden Fluids wirken, wobei vorgegebene Zellen am einströmseitigen Ende für das zu behandelnde Fluid mit einem Füllstoff verschlossen sind, während die verbleibenden Zellen am ausströmseitigen Ende für das zu behandelnde Fluid mit dem Füllstoff verschlossen sind,
worin der Mittelwert der Querschnittsflächen, die zur Mittelachsenrichtung von Verschlussabschnitten am einströmseitigen Ende der Zellen senkrecht sind, und der Mittelwert der Querschnittsflächen, die zur Mittelachsenrichtung der Verschlussabschnitte am ausströmseitigen Ende der Zellen senkrecht sind, ein Verhältnis von S1 < S2 aufweisen, worin S1 der Mittelwert der Querschnittsflächen des einströmseitigen Verschlussabschnitts und S2 der Mittelwert der Querschnittsflächen des ausströmseitigen Verschlussabschnitts ist,
wobei die Tiefe der Verschlussabschnitte am einströmseitigen Ende und die Tiefe der Verschlussabschnitte am ausströmseitigen Ende ein Verhältnis von D1 > D2 aufweisen, worin D1 die Tiefe der einströmseitigen Verschlussabschnitte ist und D2 die Tiefe der ausströmseitigen Verschlussabschnitte ist,
wobei die Porosität des Füllstoffs am einströmseitigen Ende und die Porosität des Füllstoffs am ausströmseitigen Ende ein Verhältnis von P1 < P2 aufweisen, worin P1 die Porosität der einströmseitigen Verschlussabschnitte ist und P2 die Porosität der ausströmseitigen Verschlussabschnitte ist, und
der Elastizitätsmodul jedes Verschlussabschnitts am ausströmseitigen Ende kleiner ist als jener jedes Verschlussabschnitts am einströmseitigen Ende.

2. Wabenstruktur nach Anspruch 1, worin der Mittelwert der Querschnittsflächen S1 der einströmseitigen Verschlussabschnitte in einem Bereich von 0,2 mm² < S1 < 1,0 mm² liegt,
der Mittelwert der Querschnittsflächen S2 der ausströmseitigen Verschlussabschnitte in einem Bereich von 0,4 mm² < S2 < 1,4 mm² liegt,
die Tiefe D1 der einströmseitigen Verschlussabschnitte in einem Bereich von 5mm<D1 < 15 mm liegt,
die Tiefe D2 der ausströmseitigen Verschlussabschnitte in einem Bereich von 2 mm < D2 < 10 mm liegt,
die Porosität P1 der einströmseitigen Verschlussabschnitte in einem Bereich von 40% <P1 < 60 % liegt und
die Porosität P2 der ausströmseitigen Verschlussabschnitte in einem Bereich von 50 % < P2 < 80 % liegt.

3. Wabenstruktur nach Anspruch 1, worin der Mittelwert der Querschnittsflächen S1 der einströmseitigen Verschlussabschnitte in einem Bereich von 0,3 mm² < S1 < 0,7 mm² liegt,
der Mittelwert der Querschnittsflächen S2 der ausströmseitigen Verschlussabschnitte in einem Bereich von 0,6 mm² < S2 < 1,3 mm² liegt,
die Tiefe D1 der einströmseitigen Verschlussabschnitte in einem Bereich von 8mm<D1 < 12 mm liegt,
die Tiefe D2 der ausströmseitigen Verschlussabschnitte in einem Bereich von 3 mm < D2 < 9 mm liegt,
die Porosität P1 der einströmseitigen Verschlussabschnitte in einem Bereich von 45 % <P1 < 55 % liegt und
die Porosität P2 der ausströmseitigen Verschlussabschnitte in einem Bereich von 55 % < P2 < 75 % liegt.

4. Wabenstruktur nach einem der Ansprüche 1 bis 3, worin die entgegengesetzten Enden der auf beiden Seiten vorgesehenen Zellen, zwischen die eine der Trennwände sandwichartig eingeschoben ist, verschlossen sind, und
die Form eines Abschnitts, der zur Mittelachsenrichtung der verschlossenen Zelle am einströmseitigen Ende senkrecht ist, sich von jener der verschlossenen Zelle am ausströmseitigen Ende unterscheidet.

## Revendications

1. Structure en nid d'abeilles comportant une pluralité de cellules séparées par des parois de séparation poreuses et des trajets d'écoulement de fonctionnement d'un fluide à traiter, des cellules prédéterminées dans l'extrémité côté entrée pour le fluide à traiter étant obturées par une matière de remplissage, les cellules restantes dans l'extrémité côté sortie pour le fluide à traiter étant obturées par la matière de remplissage,
dans laquelle la moyenne des sections perpendiculaires à la direction d'axe central des parties d'obturation dans l'extrémité côté entrée des cellules et la moyenne des sections perpendiculaires à la direction d'axe central des parties d'obturation dans l'extrémité côté sortie des cellules ont une relation S1 < S2, dans laquelle S1 est une section de partie d'obturation côté entrée moyenne et S2 est une section de partie d'obturation côté sortie moyenne,
les profondeurs des parties d'obturation dans l'extrémité côté entrée et les profondeurs des parties d'obturation dans l'extrémité côté sortie ont une relation D1 > D2, dans laquelle D1 est une profondeur de partie d'obturation côté entrée et D2 est une profondeur de partie d'obturation côté sortie,
la porosité de la matière de remplissage dans l'extrémité côté entrée et la porosité de la matière de remplissage dans l'extrémité côté sortie ont une relation P1 < P2, dans laquelle P1 est une porosité de partie d'obturation côté entrée et P2 est une porosité de partie d'obturation côté sortie, et
le module de Young de chaque partie d'obturation dans l'extrémité côté sortie est inférieur à celui de chaque partie d'obturation dans l'extrémité côté entrée.

2. Structure en nid d'abeilles selon la revendication 1, dans laquelle la section des parties d'obturation coté entrée moyenne S1 est dans une plage de 0,2 mm² < S1 < 1,0 mm²,
la section des parties d'obturation coté sortie moyenne S2 est dans une plage de 0,4 mm² < S2 < 1,4 mm²,
la profondeur des parties d'obturation côté entrée D1 est dans une plage de 5 mm < D1 < 15 mm,
la profondeur des parties d'obturation côté sortie D2 est dans une plage de 2 mm < D2 < 10 mm,
la porosité des parties d'obturation côté entrée P1 est dans une plage de 40 % < P1 < 60 %, et
la porosité des parties d'obturation côté sortie P2 est dans une plage de 50 % < P2 < 80 %.

3. Structure en nid d'abeilles selon la revendication 1, dans laquelle la section des parties d'obturation coté entrée moyenne S1 est dans une plage de 0,3 mm² < S1 < 0,7 mm²,
la section des parties d'obturation coté sortie moyenne S2 est dans une plage de 0,6 mm² < S2 < 1,3 mm²,
la profondeur des parties d'obturation côté entrée D1 est dans une plage de 8 mm < D1 < 12 mm,
la profondeur des parties d'obturation côté sortie D2 est dans une plage de 3 mm < D2 < 9 mm,
la porosité des parties d'obturation côté entrée P1 est dans une plage de 45 % < P1 < 55 %, et
la porosité des parties d'obturation côté sortie P2 est dans une plage de 55 % < P2 < 75 %.

4. Structure en nid d'abeilles selon l'une quelconque des revendications 1 à 3, dans laquelle les extrémités opposées des cellules disposées des deux côtés de l'une des parois de séparation sont obturées,
une forme d'une section perpendiculaire à la direction d'axe central de la cellule obturée dans l'extrémité côté entrée est différente de celle de la cellule obturée dans l'extrémité côté sortie.
